# EUROPEAN PATENT APPLICATION

(11) **EP 3 142 375 A1**
(43) Date of publication of application: **15.03.2017**
(21) Application number: 15789016.1
(22) Date of filing: 08.05.2015
(51) Int. Cl.: H04N 21/4363, H04N 21/235

(54) **METHOD AND DEVICE FOR ENCAPSULATING AUDIOVISUAL CONTENT STREAMS INTO MPEG2 PRIVATE SECTIONS, NETWORK COMMUNICATION PROTOCOL FOR IP-BASED LOCAL AREA NETWORKS, INTERACTIVE APPLICATION FOR DIGITAL TELEVISION, USER DEVICE CONTAINING APPLICATIONS, AND METHOD FOR THE TRANSMISSION OF AUDIOVISUAL CONTENT AND DATA**

(30) Priority: 09.05.2014 BR 102014011263
(71) Applicant: TQTVD Software Ltda, 20011-000 Rio de Janeiro - RJ (BR)
(72) Inventor: DE BRITTO, David Estevam, 24346-040 Niterói - RJ (BR); PERRONE, Hernán Rafael, 20510-260 Rio de Janeiro - RJ (BR); COUTINHO CORREIA, Flávio Augusto, Rio de Janeiro - RJ (BR); DE PAULA CAMPÊLO, Luiz David Sales, Rio de Janeiro - RJ (BR); RIEIRO ALVES, Roberto, Rio de Janeiro - RJ (BR)
(74) Representative: Algemeen Octrooi- en Merkenbureau B.V.
(86) International application number: PCT/BR2015/050055
(87) International publication number: WO 2015/168766

(57) **Abstract**

The present invention relates to a method for the transmission of audiovisual content and/or data to user devices without using digital television tuning resources, in that said content is encapsulated in MPEG2 private sections, subsequently multiplexed and transmitted over a digital television signal. The method uses an interactive application transmitted in a digital television signal which, when executed in the digital television receiver, extracts the MPEG2 private sections containing the audiovisual content and/or data from the digital television signal and, using a local area network (LAN) connection, forwards this audiovisual content and/or data to other user devices connected to the same local area network (LAN) as the digital television receiver. Also described is a device for the transmission of audiovisual content and/or data encapsulated in the MPEG2 private section.

## Description

### Field of the Invention

The present invention relates to a method, device and interactive application in digital TV and user device in broadcasting field without digital television tuning resources. Particularly, the present invention relates to a method, device and interactive application in digital TV broadcasting field that allows transmitting content and/or data to user devices that do not have digital TV tuning resources by means of a digital TV signal broadcast using an already available data broadcasting technology.

### Background of the Invention

Patent application WO2013/104044 describes a technique for synchronize content in a digital TV signal received by a digital-TV-receptor, with multiple mobile user device with or without Internet access. Furthermore, this document describes a transmission method of an interactive application in digital television signal broadcast using a DSMCC Data (or Object) Carousel, as described in ISO13818-6. Said interactive application is decoded and executed in the digital TV receptor within a data broadcasting execution environment, also known as digital TV middleware, and uses an available API in the runtime environment to find other devices connected to the same local area network (LAN) wherein the digital TV receptor is connected, forwarding to it the content that is being transmitted together with the interactive application into the DSMCC Data (or Object) Carousel. It is also described the ability of said method to synchronize the content exhibition in user devices with the content sent by the broadcaster. The user devices could be, inter alia, second screen devices, also known as companion devices, such as tablets or smartphones executing a second screen application.

A disadvantage of this technique is the total size of the content which can be delivered to user devices and restricted in relation to the size that could by transmitted by the DSMCC Data Carousel. Also, the response time of the available content and content synchronization are limited due to the time required by the digital TV receptor to complete the download of a DSMCC Data Carousel update, which usually takes more than 10 seconds. Said restrictions makes impossible delivering a too large audiovisual content , such as, for example, a video file longer than 10 seconds, or even live content, such as, for example, a live video stream.

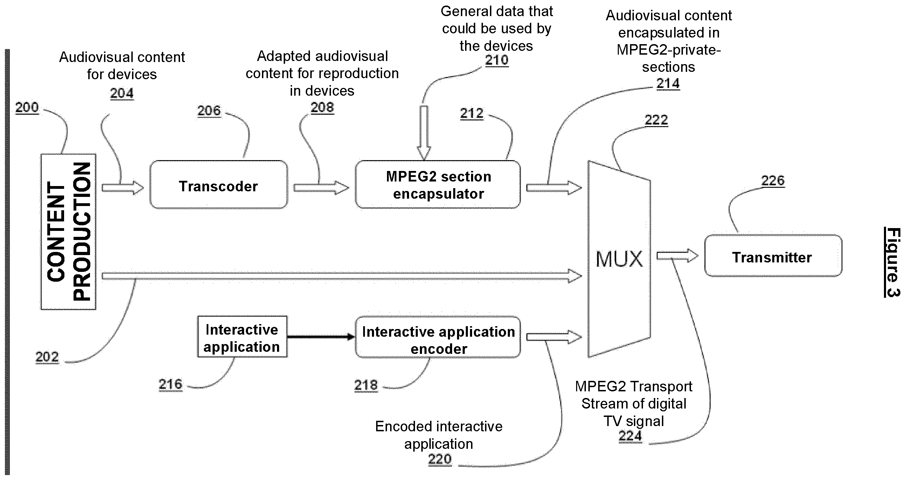

ISO13818-1 defines MPEG2 system and, particularly, MPEG2-private-sections. MPEG2-transport-stream are structured as data that could be included in a MPEG2-transport-stream for digital TV. A set of these structures, known as PSI, and usually used for including metadata that describes the MPEG2-transport-stream, listing and identifying the service and its components, such as elementary-streams-audio, video, subtitles, closed-captions, DSMCC carousels and stream events, interactive application signaling, etc., or scheduling information from the channels that fed the Electronic-Program-Guide (EPG). These structures have as identifier a packet_id (PID) and a table_id (TID). Some values of PID and TID are reserved for specific functions in digital TV system, but some other non-reserved identifiers could be used for transmitting any other type of information. Figure 3 details the structure of a MPEG2-private-section. The maximum size of a MPEG2-private-section structure is limited up to 4095 bytes.

It is still also known by the person skilled in the art that several digital TV interactive systems include an API or mechanism to allow the interactive applications extract MPEG2-private-section structures from the MPEG2-transport-stream received by the digital TV receptor. As an example, it is highlighted the API org.davic.mpeg.sections present in the systems based on Globally Executable MHP (GEM) or the APIs with com.sun.dtv.filtering defined by ABNT (Brazilian National Standards Institute) standards NBR 15606-6.

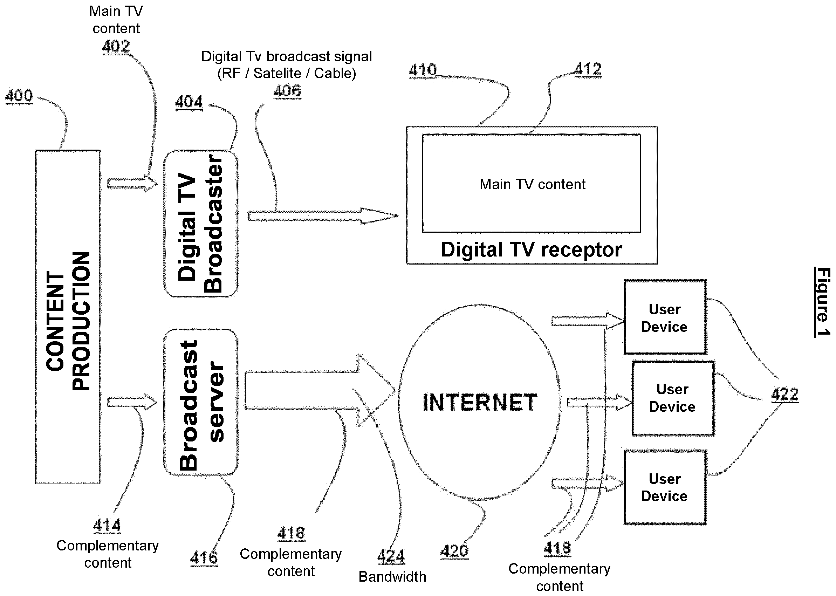

In recent years, with the growing number of mobile devices, such as tablets and smartphones, the concept of second screen devices or second screen applications has been growing in entertainment field, and particularly, television field. In general, a second screen solution allows users to access complementary audiovisual content and/or data to the main contents exhibited in the TV receptor, i.e., the first screen. Several of these solutions depend on the availability of Internet access in order that second screen devices search and exhibit complementary content. A disadvantage of this type of solution is that it can require a high cost of investment and maintenance to assure a server infrastructure and bandwidth, in the transmitter side, able to support massive and simultaneous access to, for example, more than 12 million of simultaneous access. On the other part, it is much more cost effective to make these complementary contents available in the same digital TV broadcast signal wherein the main TV content is transmitted. Figure 1, which will be described below, shows a general view of this method to make complementary content available in user devices through the internet.

### Brief Description of the Invention

The present invention refers to a method, a MPEG2-private-section-encapsulating-device, an interactive application, a networks communication protocol and other mechanisms for delivering audiovisual content and/or data that are transmitted in a digital TV signal broadcast for user devices that are not capable of receiving a digital TV broadcast signal.

In some embodiments, the method for delivering audiovisual content and/or data to user devices that are not capable of receiving digital TV broadcast signal, according to the present invention, include a device for adapting (a transcoding) the audiovisual content in a format that can be reproduced in user devices. Said adaptations can include, for example, adjusting the resolution and the relation of video aspect, audio and video bitrate and encodings.

In some embodiments according to the present invention, the method includes a MPEG2-private-sections- encapsulating-device for encapsulating the adapted audiovisual content and/or MPEG2-private-sections data, and serialize in a MPEG2-transport-stream-packets stream for subsequent multiplexing in a MPEG2-transport-stream to be transmitted in a digital TV broadcast signal.

In some embodiments according to the present invention, in the same MPEG2-transport-stream to be transmitted in a digital TV broadcast signal an interactive application intended to run on a digital TV receptor is accordingly multiplexed and transmitted. As it is expected, this MPEG2-transport-stream also contains the main TV content, i.e., audio, video, closed captions/subtitles, etc.

In some implementations according to the present invention, the digital TV receptor can be a Tv set or a set-top-box. When the digital TV receptor tunes a digital TV broadcast signal, it decodes the MPEG2-transport-stream and reproduces the main TV content, which is audio, video, closed captions/subtitles, etc., in the screen and speakers of the digital TV receptor. Alternatively, in the case of set-top-boxes, the contents are transmitted through the respective audio and video output. Additionally, the digital TV receptor decodes and runs the interactive application within the runtime environment, or interactive digital TV middleware, such as MHP, Ginga, etc. The interactive application uses the available API in the runtime environment for extracting the MPEG2-private-sections that encapsulate audiovisual content and /or data from the MPEG2-transport-stream. As examples of this API, it could be mentioned the org.davic.mpeg.sections API from the systems based on the Globally Executable MHP (GEM) specification and com.sun.dtv.filtering API specified by ABNT standards NBR 15606-6.

In some embodiments according to the present invention, the digital TV receptor is connected to a local area network (LAN). Said LAN can be wired (Ethernet), wireless (such as IEEE 802.11 a/b/g/n or similar) or a combination thereof, wired and wireless.

In some embodiments according to the present invention, it is required the implementing of network communication protocol by the interactive application and user devices, based on IP networks, for communication among them when connected to the same LAN.

In some embodiments according to the present invention, the network communication protocol can provide a search engine to allow that the interactive application and user devices acknowledge the presence of each one of them in the same LAN.

In some embodiments according to the present invention, the search engine could require that the interactive application announces its presence to the user devices, the user devices announce their respective presences to the interactive application, or any combination of both cases.

In some embodiments according the present invention, the network communication protocol can provide an audiovisual content announcing mechanism and a data announcing mechanism that make the user devices aware of the contents available by the interactive application. In some embodiments of said mechanisms, it can be required that the interactive application announces the availability of such contents, that user devices consult the interactive application about the contents which are available in a determined moment or any combination thereof.

In some embodiments according to the invention, the network communication protocol can provide an audiovisual content request mechanism and a data request mechanism that allow the user devices requesting to the interactive application to send the audiovisual content and/or data extracted from the MPEG2-transport-stream.

In some embodiments according to the invention, the network communication protocol can provide an audiovisual content sending mechanism and a data sending mechanism that allow the user devices sending audiovisual content and/or data extracted from the MPEG2-transport-stream to user devices.

In some implementations according the present invention, user devices should be capable of receiving audiovisual content and/or data sent by the interactive application and to perform decoding processes, processing, interpretation in order to reproduce and or to exhibit the audiovisual content and/or data is its respective screen and speakers.

In some embodiments according to the present invention, the user devices could be tablets, smartphones, personal computers or any other devices capable of connecting to a LAN and that has a screen, an audio output, such as speakers or headphones, or any combinations of these elements.

In some embodiments according to the present invention, user devices can run one or more applications to support the actions, functions and protocols herein described.

### Brief Descrintion of the Drawings

Figure 1 is a block diagram providing a general view of the previous method for delivering a complementary content to the user device using the Internet.
Figure 2 is a block diagram providing a general view of the method for delivering audiovisual content and/or data to user devices without digital TV tuning capability.
Figure 3 is a block diagram representing the transmission process for sending audiovisual content and/or data to user devices without digital TV tuning capability.

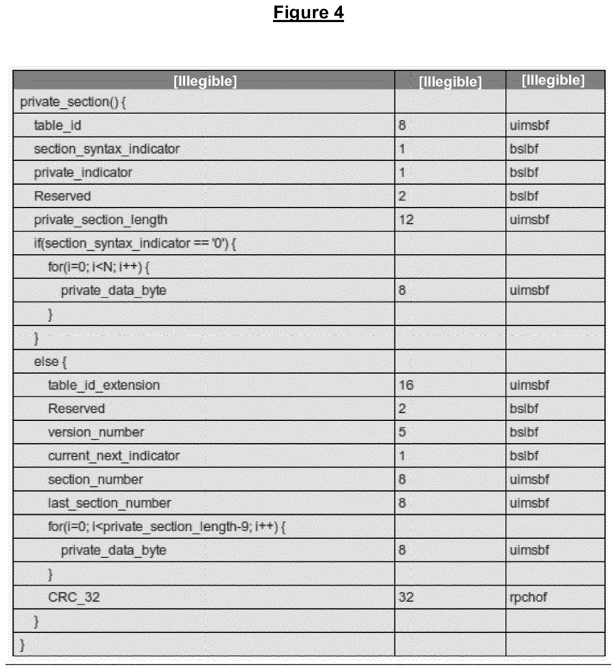

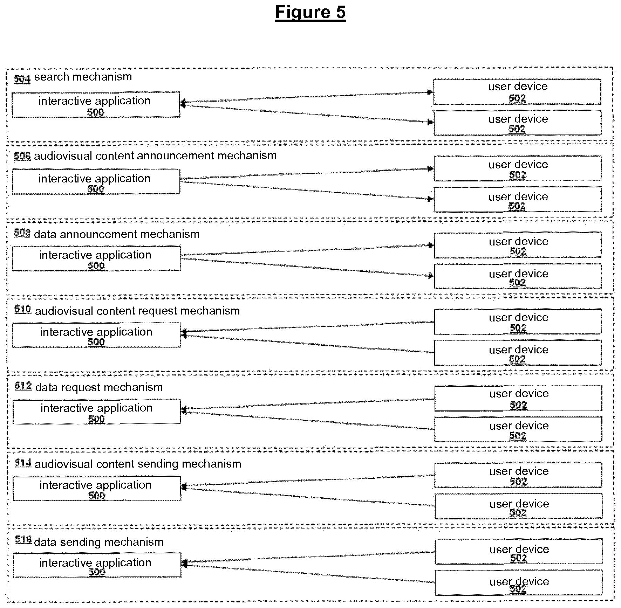

Figure 4 describes the logic structure of a MPEG2-private-section.

### Detailed Descrintion of the Invention

### Technical Problem

The objective of the present invention is to provide means for sending audiovisual content and/or data which are transmitted in a digital TV broadcast signal to user devices not capable of receiving a digital TV broadcast signal. Examples of user devices could be tablets, smartphones used as second screen devices for accessing the complementary content reproduced in the digital TV receptor, that is, main screen or main device. Such complementary content could be audiovisual content, such as, for example, video clips and/or audio clips, live video streaming or data streaming, such as, for example, texts, photos, statistics, etc. Usually, the complementary content could be related to the main TV content, but this is not a required condition.

Due to the lack of resources to receive digital TV broadcast signal in such user devices, generally, the complementary content is received through an Internet connection.

Figure 1 illustrates this scenario, wherein the content producer (400) sends a main TV content (402) to the digital TV broadcaster (404), which generates and transmits the digital TV broadcast signal (410), and the main TV content is reproduced on the screen and speakers from the digital TV receptor (412). Simultaneously, the content producer (400) delivers the complementary content, usually audiovisual content and/or data (414) to the server (416) from the broadcaster of digital TV connected to the Internet (420). The user devices (422) request the complementary content (418) to the digital TV broadcaster server (416) and exhibit them in their respective screens. The bandwidth requirements (424) and server (416) computer capacity of the digital TV broadcaster increases according to the number of user devices (422) requesting the complementary content (418). Thus, using Internet to the deliver ty type of content, the following inconvenient are inevitable:
a. the investment in server broadband and infrastructure, of the broadcaster, increases proportionally to the number of users that access the complementary content.
b. The delivery reliability and user experience can be affected due to the bandwidth and quality of the Internet of the users.

Furthermore, the carouseling techniques use in data transmission of the system descried above, also known as interactive TV, has an imitation related to the maxim size of the content sent in a carousel, and it is not possible to deliver video contents such as great files or, also, live video content using DSMCC-Object-Carousel or DSMCC-Data-Carousel protocols (ISO 13818-6).

The present invention allows delivering complementary contents using bandwidth not used in the digital TV broadcast signal, preventing the inconvenient of content delivery using Internet as described above, without additional costs, with reliable delivery and user experience assured independent on the Internet access availability of the user.

### Technical Solution - Overview

The present invention allows delivering complementary contents, such as audio or video streams, without limiting time or size, including audio or live video streams.

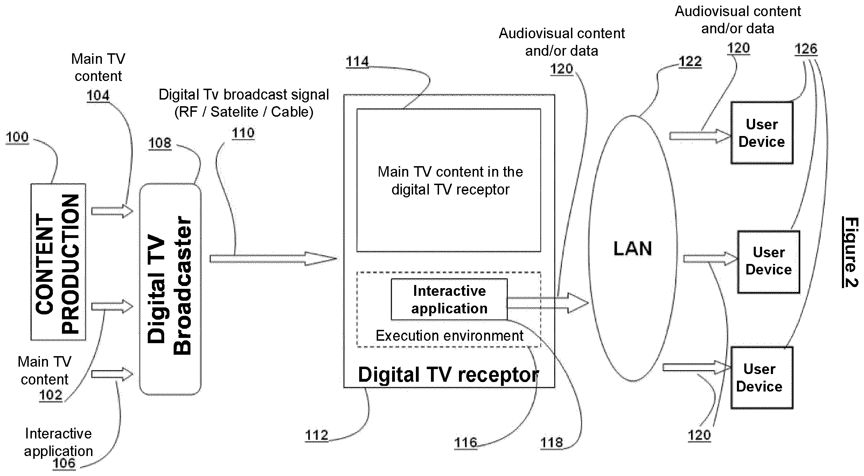

Figure 2 presents an overview of the present invention. The content production (100) process provide the main TV content (102), including audio, video, subtitles and/or closed caption, and any other content usually generated by a conventional digital TV broadcast service. Furthermore, the content production (100) provides complementary contents, also referred as audiovisual content, aimed for reproduction into user devices (104). An interactive application (106) capable of extracting the audiovisual content and/or data (104) from the digital TV broadcast signal and forward them to the user devices, it is also provided. The digital TV broadcaster (108) generates and transmits a digital TV broadcast signal including the main TV content (102), the audiovisual content and/or data (104) and interactive application (106).

The digital TV receptor (112) tunes the digital TV broadcast signal, decoding the MPEG2-transport-stream and reproducing the main TV content, i.e., audio, video, close captions/subtitles, etc., on the screen and speakers, or alternatively, in the case of set-top-boxes, the contents are transmitted through the respective audio and video outputs.

The digital TV receptor also decodes and runs the interactive application (118) inside its runtime environment (116). Examples of runtime environment could be a middleware of interactive digital TV, such as MHP, Ginga, etc. The interactive application (118) uses the available API in the runtime environment (116) for extracting from the MPEG2-transport-stream the MPEG2-private-sections that contain encapsulated audiovisual content and /or data (120). As examples of this API, it could be mentioned the org.davic.mpeg.sections API from the systems based on Globally Executable MHP (GEM) specification and com.sun.dtv.filtering API specified by ABNT standards NBR 15606-6.

However, it is worth mentioning that is necessary that the digital TV receptor (112) is connected to a LAN (122), which could be wired (for example, Ethernet), wireless (such as IEEE 802.11 a/b/g/n networks or similar) or a combination thereof, wired and wireless.

Further, in order that the user devices (126) can receive and reproduces the audiovisual content and/or data, it is required that they are connected to the same LAN (122) that the digital TV receptor (112) is. As example, the user devices (126) could be any type of tablets, smartphones, personal computer or any other device capable of being connected to the LAN (122) and that has a screen and/or audio output, such as speakers or headphones. In some embodiments, user devices (126) can host and run one or more applications in order to support actions, functions and protocols that are attributed to them by the present invention.

### Technical Solution - Transmission Side

The input of the process object of the present invention is the content generated by the preexistent content production processes (200). The content production (200) provides the main TV content (202), including audio, video, subtitles, closed caption and any other content usually generated by a conventional digital TV broadcast service. Furthermore, the content production (200) provides complementary contents, also referred as audiovisual content, aimed for reproduction into user devices (204).

In case the audiovisual content destined for reproduction on user devices (204) provided by the content production (200) requires adaptations in order to be reproduced by the user devices or to be transmitted in little blocks, a transcoder device (206) is used to encode the audiovisual content one more time. Such adaptations include, for example, the adjustment of video resolution ant its relation to the aspect, audio and video bitrate, audio and video encodings, and any other adjustment necessary to convert the audiovisual content to a format able to be sent as a stream. It can be mentioned as an example able to be sent as a stream the ones used in MPEG2-transport-stream, RTPI, RTPS, HLS, etc. The transcoder device output (206) is an audiovisual content adapted for reproduction in the user devices (208). This step can be ignored in case the audiovisual content provided by the content reproduction (100) is already in a format adequate for reproduction in user devices (208) and to be transmitted in stream format.

The audiovisual content already adapted for reproduction in the user device (208) then is encapsulated in MPEG2-private-sections by a MPEG2-private-sections-encapsulator-device (212). The MPEG2-private-sections-encapsulator-device (212) generates a MPEG2-private-sections sequence following a method composed by the following steps:
a. designating to the table_id field a predefined value;
b. designating to the section_number field a sequentially increased value;
c. whenever the section-number field value reaches a predefined value (in the range between 0 and 255) designated to the last_section_number field, the section_number sequence is restarted in 0;
d. designating to the version_number field a value that is sequentially increased whenever the section_number field sequence is restarted;
e. whenever the version_number field value reaches a maximum value predefined for this field (in the range from 1 to 31), the sequence is restarted to a predefined initial value (in the range between 0 and the predefined maximum value for the version_number minus 1);
f. adding in ordered way, to the private_data_byte field of the MPEG2-private-section as much blocks and packets of adapted audiovisual content (208) as possible within this field, without exceeding the predefined maximum side to the MPEG2-private-section (usually the predefined maximum size is 4095 bytes);
g. calculating and designating the values to the section_lenght and CRC fields;
h. dividing the MPEG2-private-section in a sequence of MPEG2-transport-stream-packets (214) and designating for each the same value predefined to the packet_id field (PID); and
i. deliver the MPEG2-transport-stream-packets (214) generated to a MPEG2-transport-stream multiplexer (222).

The steps from (a) to (i) are continuously repeated while there is audiovisual content available.

A variation of step (f) of the method according to the present invention described above allows the audiovisual content blocks or packets be divided between current and next MPEG2-private-section to be generated, allowing, whenever applicable, that the MPEG2-private-section to have an allowed maximum size (section_lenght field usually 4095 bytes). This approach is more efficient once that it allows delivering more audiovisual content blocks or packets in a smaller number of MPEG2-private-sections.

In some embodiments according to the present invention, the transcoder device can provide an adapted audiovisual content for exhibition in user devices in format of a stream containing RTP control packets, RTP packets and RTP Session Descriptors, which are then encapsulated in MPEG2-private-sections by the MPEG2-private-section-encapsulator-device.

In other embodiments according to the present invention, the transcoder device can provide an adapted audiovisual content for exhibition in user devices in format of a stream containing MPEG2-transport-stream packets which are then encapsulated in MPEG2-private-sections by the MPEG2-private-section-encapsulator-device.

Besides the adapted audiovisual content for exhibition in user devices (208), the MPEG2-private-section-encapsulator-device (212) can output MPEG2-private-sections containing blocks or structures of generic data that could be interpreted by the user devices (210). The encapsulating process is exactly the same as the one described for the adapted audiovisual content for exhibition is user devices (208).

Furthermore, an interactive application (216) intended to be executed in the digital TV receptor is encoded by an interactive application encoder device (218).

The TV main TV content (202), the encoded interactive application and the audiovisual content and/or data encapsulated in MPEG2-private-sections (214) are forwarded to the MPEG2-transport-stream multiplexer (222), which generates a MPEG2-transport-stream-signal (224) proper to be transmitted in a digital TV broadcast signal (226). At last, the digital TV broadcaster device (226) transmits the digital TV broadcast signal. AS example of these transmissions, it can be mentioned the terrestrial TV broadcast signal, satellite TV signal or cable TV signal.

### Technical Solution - Recentor Side

The digital TV receptor (112) tunes a digital TV broadcast signal, it decodes the MPEG2-transport-stream and reproduces the main TV content, i.e., audio, video, closed captions/subtitles, etc., in its screen and speakers. Alternatively, in the case of set-top-boxes, the image and sound are transmitted through the respective audio and video output.

The digital TV receptor also decodes and runs the interactive application (118) inside its runtime environment (116). Examples of runtime environment could be a middleware of interactive digital TV, such as MHP, Ginga, etc. The interactive application (118) uses the available API in the runtime environment (116) for extracting from the MPEG2-transport-stream the MPEG2-private-sections that contain encapsulated audiovisual content and /or data (120). As examples of this API, it could be mentioned the org.davic.mpeg.sections API from the systems based on Globally Executable MHP (GEM) specification and com.sun.dtv.filtering API specified by ABNT standards NBR 15606-6.

It is required that the digital TV receptor (112) is connected to a LAN (122). Said LAN (122) can be wired (such as Ethernet), wireless (such as IEEE 802.11 a/b/g/n or similar) or a combination thereof, wired and wireless.

Further, in order that the user devices (126) can receive and reproduces the audiovisual content and/or data, it is required that they are connected to the same LAN (122) that the digital TV receptor (112) is. As example, the user devices (126) could be any type of tablets, smartphones, personal computer or any other device capable of being connected to the LAN (122) and that has a screen and/or audio output, such as speakers or headphones. In some embodiments, user devices (126) can host and run one or more applications in order to support actions, functions and protocols that are attributed to them by the present invention.

The interactive application (118) that is being run in the digital TV receptor (112) and the user devices (126) communicates with each other by means of a predefined network communication protocol. Such network communication protocol is implemented by all user devices and interactive application. The network communication protocol includes the interactive application search mechanisms and user devices, audiovisual content announcement, data-announcement, audiovisual content request, data request, audiovisual content sending and data sending mechanisms.

When using the network communication protocol, the user devices:
a. become aware of the interactive application presence;
b. become aware of audiovisual content availability;
c. become aware of data availability;
d. request the delivery of audiovisual content to the interactive application (118);
e. request the delivery of data to the interactive application (118);
f. receive, though the interactive application (118), the audiovisual content (124);
g. receive, through the interactive application (118) the data (124).

The user devices (126) encode, process and reproduce in their respective screens and/or speakers, the received audiovisual content and/or data.

### Technical Solution - Network Communication Protocol between the Interactive Application and User Devices

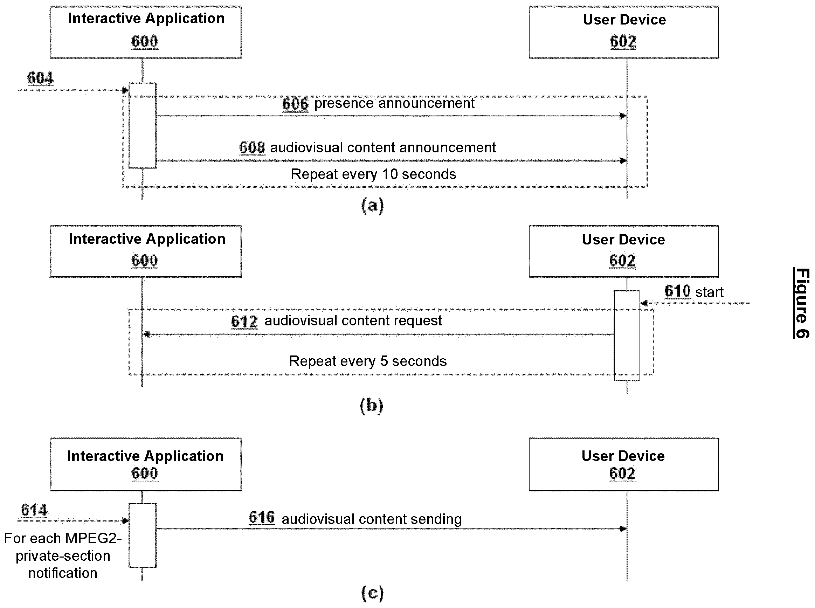

The interactive application (118) that runs into the digital TV receptor and user devices (126) must implement a network communication protocol which allows the communication between them. It is required that all user devices (126) and digital TV receptor (112) wherein the interactive application (118) is run must be connected to the same LAN (122). The network communication protocol can contemplate, among other, the following mechanisms, such as illustrated in Figure 6:
a. search (504): mechanisms that allow the interactive application (500) and the user devices become aware of the presence of others when connected to the same LAN;
b. audiovisual content announcement (506): mechanism that allow the user devices (502) become aware of audiovisual content availability, provided by the interactive application (500) and destined to be consumed by user devices;
c. data announcement (508): mechanism that allow the user devices (502) become aware of data availability, provided by the interactive application (500) and destined to be consumed by user devices;
d. audiovisual content request (510): mechanism that allows the user devices (502) to request to the interactive application (500) to send the audiovisual content;
e. data request (510): mechanism that allows the user devices (502) to request to the interactive application (500) to send the data;
f. audiovisual content sending (514): mechanism for sending audiovisual content to the interactive application (500) to the user devices (502);
g. data sending (516): mechanism for sending data to the interactive application (500) to the user devices (502).

The network communication protocol can be implemented as text message exchange using any combination of UDP datagram (point-to-point UDP datagrams, point-to-multipoint UDP datagrams and broadcast UDP datagrams) and TCP connections.

In different embodiments according to the present invention, the protocol can be designed to be triggered by the interactive application (500), by user devices (502) or any one of them.

The implementation of audiovisual content sending mechanisms or data sending mechanism can consider sending of MPEG2-private-sections as well as extracted from MPEG2-transport-stream. Alternatively, the implementation of audiovisual content sending or data sending mechanism can consider that the interactive application (500) that is being ran into the digital TV receptor decodes the MPEG2-private-sections extracted from MPEG2-transport-stream and send only audiovisual content and/or data to the user devices (502), disconsidering the MPEG2-private-section heading and CRC.

In the case of user devices, the implementation of the described network communication protocol can be provided by their own user device or by one or more user applications settled and ran in the user devices.

### Technical Solution - General Advantage

The method for defining the values of section_number and version_number fields allows the continuous delivery of new audiovisual (208) and/or data (210) content blocks and packets. The runtime of these blocks and packets encapsulated in MPEG2-private-sections (214) is usually very short and it is expected that they are processed and immediately discarded by user devices (126). If no user device (126) is available or it has not requested the sending of audiovisual content, the interactive application (118) discards immediately such block or packet. Thereby, the method according the present invention also applies to the transmission of live audiovisual content.

### Examples

As follows, it is demonstrated a method, device, protocol and interactive application implementation example of the present invention as detailed above. However, such example should not considered as limiting the scope of the present invention, once that other implementation forms could be envisioned by the person skilled in the art.

### Implementation example - Transmission Side

### Example 1 - encoding the audiovisual content using RTP streams:

The transmission system could be constructed based on Brazilian digital TV system ISDB-T and easily built in to the transmission workflow of a broadcaster.

The main TV content could be the video and audio stream using H.264 and MPEG-4 AAC encodings, respectively. closed captions can also be included. Given the Electronic Programming Guide (EPG) and other service information metadata (SI) can be generated and included according to ABNT NBR 15603.

The interactive application can be developed accordingly to the middle ware standard Ginga (ABNT NBR 15606). Sai interactive application can use the com.sun.dtv.filtering API as specified in ABNT NBR 15606-6 to extract MPEG2-private-sections from the MPEG2-transport-stream which compose the digital TV broadcast signal. The network communication protocol can be implemented as the APIs provided by the java.net packet specified in Personal Basis Profile 1.2.1, that is also included in middleware standard Ginga (ABNT NBR 15606-4).

The interactive application encoder device ca be implemented as an interactivity playout Ginga used to encode the Ginga applications into DSMCC Object Carousel protocol.

The multiplexing and transmitting of MPEG2-transport-stream can use the same equipment already used in conventional ISDB-T digital TV broadcasts.

The audiovisual content for user devices provided by the content production process can be a FullHD video and audio stream, previously recorded or live, using H.264 and MPEG-4 AAC encodings, respectively. The bitrate can also have any value that provides a high quality transmission for the FullHD format (as example, 13Mbps).

The transcoder device encodes once again the FullHD video for a proper resolution, encoding, bitrate and frame rate to be reproduced by user devices (as example, 720x362, H.264, 15 fps). In the same way, the audio is encoded again to a proper format, bitrate, sample rate and encoding for reproduction in user devices (as example, MPEG-4 AAC HE). The total bitrate is reduced to 500 Kbps. The adapted streams are generated by the transcoder device using RTP/RTSP protocol as a RTP stream containing RTP packets and RTP control packets. The transcoder device also generates a data structure of RTP Session Descriptor type.

The MPEG2-private-sections-encapsulator device receives the RTSP stream packets, the RTP control packet and RTP Session Descriptor generated by the transcoder device and it generates the MPEG2-private-sections added to the RTP/RTSP packets in the private_data_byte field. The generated MPEG2-private-sections are forwarded to the MPEG2-transport-stream multiplexer as a MPEG2-transport-stream sequence packets and, finally, input into the digital TV broadcast signal.

### Example 2 - encoding the audiovisual content using MPEG2-transport-stream streams:

In another implementation example, derived from Example 1, the transcoder device encodes once again the FullHD video for a proper resolution, encoding, bitrate an frame rate to be reproduced by user devices (as example, 720x362, H.264, 15 fps). In the same way, the audio is encoded again to a proper format, bitrate, sample rate and encoding for reproduction in user devices (as example, MPEG-4 AAC HE). The total bitrate is reduced to 500 Kbps. The adapted streams are generated by the transcoder device using MPEG2-transport-stream protocol as a stream containing sequential packets of MPEG2-transport-stream-packets, including the required PSI to encode the stream.

The MPEG2-private-sections-encapsulator device receives the MPEG2-transport-stream-packets stream packets generated by the transcoder device and generates the MPEG2-private-sections adding the MPEG2-transport-stream-packets packets in private_data_byte field. The generated MPEG2-private-sections are forwarded to the MPEG2-transport-stream multiplexer as a MPEG2-transport-stream sequence packets and, finally, input into the digital TV broadcast signal.

### Implementation example - Reception Side

As an implementation example of digital TC receptor, any TV set or set-top-box capable of tuning and decoding the IDSB-T digital TV can be considered, since it also includes support to the interactive middleware Ginga, according to ABNT NBR 15606 and capable of being connected to a LAN through an Ethernet or Wi-Fi interface.

It must be highlighted that various user devices which can be used, such as any user smartphone or tablet wherein it was settled and ran an application that implements the same network communication protocol implemented by interactive application Ginga being transmitted into the ISDB-T digital TV broadcast signal as described in the previous section. Said application can have a user interface that allows the user to select and reproduce the audiovisual content that is being delivered encapsulated in MPEG2-private-sections. Usually, this function could be part of an application much more complex, such as a second screen application.

### Implementation Example - Network Communication Protocol between the Interactive Application and User Devices

The interactive application can be developed accordingly to the middleware standard Ginga ABNT standard NBR 15606. The network communication protocol can be implemented as the APIs available in the java.net packet specified in Personal Basis Profile 1.2.1, that is also part of the middleware Ginga specification according to the Brazilian standard ABNT NBR 15606-4.

In the case of application that will be executed in user devices, the network communication protocol can be implemented with the network access APIs available in such platforms (such as, iOS and Android).

In this example, the search mechanism can be implemented, as illustrated in Figure 6a, by the interactive application (600) sending a message as a broadcast UDP datagram every 10 seconds.

In this example, the audiovisual content announcement and data announcement can be implemented, as showed in Figure 6a, such as the interactive application (600) sends a message containing information and details about the audiovisual content and data available, such as a broadcast UDP datagram in every 10 seconds.

The audiovisual content requesting and data requesting mechanism can be implemented, as shown in Figure 6b, in such way that the application running into the user devices (602) sends a message requesting the delivery of the announced audiovisual content and/or data (612), as a point to point UDP datagram to the interactive application

(600). Said message (612) must be sent to each application every 5 seconds. If the interactive application (600) does not receive said message (612) in a determined user device (602) in a time period (e.g., 10 sec), the interactive application (600) assumes that the user device (602) is no longer interested in receiving the audiovisual content and/or data and it will interrupt sending these to the determined user device (602).

The audiovisual content sending and data sending mechanism can be implemented, as shown in Figure 6c, in such a way that the interactive application (600) sends messages (616) containing the audiovisual content and/or data to every user device (602) that has requested the sending. These messages (616) can be sent through the LAN as point-to-point UDP datagram. The messages (616) can be sent to every MPEG2-private-section extracted from the MPEG2-transport-stream by the com.sun.dtv.filtering API, and it can contain the complete MPEG2-private-section.

In another implementation example of this solution, the audiovisual content requesting and data requesting mechanisms can be implemented, in such a way that the execution in the user devices stablishes a TCP connection with the interactive application. Once stablished said TCP connection, it will takes pace the audiovisual content sending and data sending during the time that it remain opened. In this case the interactive application will send, through said TCP connection, messages containing the audiovisual content and/or data. The messages can be sent to every MPEG2-private-section extracted from the MPEG2-transport-stream by the com.sun.dtv.filtering API, and it can contain the complete MPEG2-private-section. The TCP connection can be closed by the application running in the user devices, indicating that the interactive application which must interrupt the audiovisual content sending and the data sending.

## Claims

1. Method for encapsulating audiovisual-content-streams into MPEG2-private-sections, **characterized by** being generated in an ordered way, said method comprises the following steps:
(a) designating to the table_id field a predefined value;
(b) designating to the section-number field a sequentially increased value;
(c) whenever the section_number field value reaches a predefined value (in the range between 0 and 255) designated to the last_section_number field, the section_number sequence is restarted in 0;
(d) designating to the version_number field a value that is sequentially increased whenever the section_number field sequence is restarted;
(e) whenever the version_number field value reaches a maximum value predefined for this field (in the range from 1 to 31), the sequence is restarted to a predefined initial value (in the range between 0 and the predefined maximum value for the version_number minus 1);
(f) adding in ordered way, to the private_data_byte field of the MPEG2-private-section as much blocks and packets of adapted audiovisual content as possible within this field, without exceeding the predefined maximum side for the MPEG2-private-section;
(g) calculating and designating the values to the section_lenght and CRC fields;
(h) dividing the MPEG2-private-section in a sequence of MPEG2-transport-stream-packets (214) and designating for each the same value predefined to the packet_id field (PID).

2. Method of claim 1, **characterized by** the audiovisual content streams be included in a RTP control packet stream, RTP packets, RTSP packets or combination thereof.

3. Method of claim 2, **characterized by** some of the MPEG2-private-section contain RTP Session Descriptors.

4. Method of claim 1, **characterized by** the audiovisual content streams be included in a MPEG2-transport-stream packet stream.

5. Device for encapsulating audiovisual content in MPEG2-private-sections in order to be multiplexed in a MPEG2-transport-stream, **characterized by** implementing the method defined in any of the claims 1, 2, 3 or 4.

6. Network-communication-protocol for local area networks based on IP, **characterized by** being used among an interactive application which implements said protocol and that it is executed in a digital TV receptor connected to a LAN, other user devices that are also connected to the same LAN and that also implement the same network communication protocol, said network communication protocol comprising the following mechanisms:
(a) search: mechanisms that allow the interactive application and the user devices become aware of the presence of others when connected to the same LAN;
(b) audiovisual content announcement: mechanism that allow the user devices become aware of audiovisual content availability, provided by the interactive application and destined to be consumed by user devices;
(c) data announcement: mechanism that allow the user devices become aware of data availability, provided by the interactive application and destined to be consumed by user devices;
(d) audiovisual content request: mechanism that allows the user devices to request to the interactive application to send the audiovisual content;
(e) data request: mechanism that allows the user devices to request to the interactive application sending the data;
(f) audiovisual content sending: mechanism for sending audiovisual content to the interactive application to the user devices;
(g) data sending: mechanism for sending data to the interactive application to the user devices.

7. NETWORK COMMUNICATION PROTOCOL of claim 6, **characterized by** said mechanism can be implemented as messages sent as point-to-point UDP datagrams, point-to-multipoint UDP datagrams, broadcast UDP datagrams, TCP connections or combinations of these technologies.

8. NETWORK COMMUNICATION PROTOCOL of claim 6, **characterized by** the implementation of said protocol can be provided by other user devices or by one or more applications being executed in such user devices.

9. Interactive application for digital TV, **characterized by** being transmitted in a digital tv broadcast signal and executed in a digital tv receptor, said application being capable of:
(a) implementing a network communication protocol according to claims 6 and 7;
(b) using the mechanisms available in the digital TV receptor for extracting MPEG2-private-sections from MPEG2-transport-stream which complies a digital TV broadcast signal; and
(c) using a network communication protocol according to claims 6 and 7 for sending, to other user devices connected to a local area network (LAN), complete or partial content contained in MPEG2-private-sections extracted from MPEG2-transport-stream which complies with a digital TV broadcast signal.

10. User device or a combination of a user device and one or more applications **characterized by** being executed in said user device capable of:
(a) being connected, through cable or wireless, to a local area network based on IP;
(b) implementing a network communication protocol according to claims 6, 7 and 8;
(c) receiving, encoding, processing and reproducing audiovisual content sent by an interactive application, according to claim 9, executed in the digital TV receptor connected to the same LAN.

11. Method for transmitting audiovisual content and/or data, **characterized by** transmitting data to user devices without resources for tuning a digital tv broadcast signal through a digital tv broadcast signal, said method comprising the following steps:
(a) encapsulating audiovisual content streams in MPEG2-private-sections according to the method of claims 1, 2, 3, 4 or combinations thereof; transport-stream which complies with a digital TV broadcast signal;
(b) multiplexing the MPEG2-private-sections within a MPEG2-transport-stream which complies with a digital TV broadcast signal;
(c) including into the digital TV broadcast signal an interactive application that implements, at least, the functions of claim 9;
(d) a digital TV receptor connected, in wired or wirelessly form, a local area network (LAN) that, when tuned in a digital TV broadcast signal:
i. encodes the digital TV signal and reproduces the main TV content; and
ii. executes, in its runtime environment, an interactive application received from the digital TV broadcast signal.
(e) the interactive application uses the network communication protocol, as claims 6 and 7, to search other user devices in the local area network (LAN) to announce the availability of audiovisual content and/or data;
(f) the user devices connected to the same local area network (LAN) use the network communication protocol, according to claims 6, 7 and 8, for requesting to the interactive application to send audiovisual content and/or data;
(g) the interactive application uses network communication protocol, according to claims 6 and 7, for sending audiovisual content and/or data to the user devices requesting such sendings;
(h) the user devices that have requested the sending of audiovisual content and/or data from the interactive application, receive said audiovisual content and/or data using network communication protocol, according to claims 6, 7 and 8, and encodes, processes and reproduces them.

12. Method of claim 11, **characterized by** the fact that the digital Tv broadcast signal is terrestrial, satellite or cable.
